# FASCICULE DE BREVET EUROPEEN

(11) **EP 4 656 360 B1**
(45) Date de publication et mention de la délivrance du brevet: **02.12.2026**
(21) Numéro de dépôt: 25151039.2
(22) Date de dépôt: 09.01.2025
(51) Int. Cl.: B29C 70/08, B29C 70/44, B29C 70/54, B29C 70/68, B29C 70/86, B29D 24/00, B29D 99/00

(54) **PROCÉDÉ DE FABRICATION D'UNE COQUE THERMOPLASTIQUE DÉCORÉE EN UNE SEULE OPÉRATION**
VERFAHREN ZUR HERSTELLUNG EINER THERMOPLASTISCHEN SCHALE, DIE IN EINEM EINZIGEN BETRIEB DEKORIERTEN SCHALE
METHOD FOR MANUFACTURING A THERMOPLASTIC SHELL DECORATED IN A SINGLE OPERATION

(30) Priorité: 28.05.2024 FR 2405462
(43) Date de publication de la demande: 03.12.2025
(73) Titulaire: Airbus Atlantic, 17300 Rochefort (FR)
(72) Inventeur: RODRIGUEZ, Frédéric, 17300 Rochefort (FR)
(74) Mandataire: Santarelli

(56) Documents cités:
- WO-A1-2020/065448
- GB-A- 2 310 822
- US-A1- 2012 315 429
- US-A1- 2023 143 940

## Description

### DOMAINE TECHNIQUE

La présente invention appartient au domaine des procédés de fabrication de pièces en matériaux composites, notamment les coques en composites thermoplastiques. Elle concerne plus particulièrement un procédé de fabrication d'une coque thermoplastique décorée, en une seule opération.

L'invention trouve une application directe, mais non exclusive, dans la fabrication de coques d'habillage de fauteuils aéronautiques, en particulier ceux des classes supérieures (première classe et classe affaires).

En effet, dans de tels fauteuils, la coque d'habillage est conçue, entre autres, pour envelopper partiellement le fauteuil et ainsi délimiter un espace privatif du passager.

### ÉTAT DE L'ART

La fabrication de coques en matériaux composites, notamment pour des applications exigeantes telles que les fauteuils d'avion, repose sur des procédés bien établis mais présentant certaines limitations. Les coques en composites sont largement utilisées en raison de leur légèreté, de leur résistance mécanique et de leur capacité à être moulées en formes complexes.

Les méthodes de fabrication traditionnelles des coques en composites impliquent souvent l'utilisation de matériaux thermodurcissables. Ces matériaux, tels que les résines époxy et polyester, sont transformés par un processus de polymérisation irréversible qui confère au matériau final ses propriétés mécaniques et thermiques.

Une technique couramment utilisée est le drapage manuel *(hand lay-up),* où des couches successives de renforts en fibre, comme la fibre de verre ou de carbone, sont imprégnées de résine thermodurcissable et déposées dans un moule. Le moulage par transfert de résine (RTM, *Resin Transfer Molding*) est une autre méthode largement répandue. Elle consiste à injecter de la résine dans un moule fermé contenant les renforts en fibre, permettant une meilleure imprégnation et une qualité supérieure de la pièce finie.

Pour le durcissement des matériaux thermodurcissables, les pièces moulées sont généralement placées dans une étuve ou un autoclave. Le moulage sous vide (*Vacuum Bagging*) est souvent combiné avec l'autoclave pour améliorer la consolidation des couches et éliminer les bulles d'air. L'autoclave utilise une combinaison de pression élevée et de température pour garantir que la résine se polymérise de manière homogène et que la pièce obtenue possède des propriétés mécaniques optimales.

Bien que ces méthodes soient largement adoptées, elles présentent plusieurs limitations notables. Premièrement, les matériaux thermodurcissables utilisés ne sont pas recyclables. En fin de vie, ces coques ne peuvent pas être retransformées en nouveaux matériaux, ce qui pose des problèmes environnementaux importants.

Deuxièmement, le processus de fabrication est complexe et implique plusieurs étapes. La nécessité de passer par une cuisson en étuve ou autoclave pour la polymérisation ajoute du temps et des coûts à la production. De plus, la finition des coques est souvent réalisée manuellement, par l'application d'un film décoratif après le démoulage. Cette opération non seulement allonge le temps de production, mais augmente également les risques de défauts et de nonconformités.

Des articles scientifiques et des rapports industriels soulignent ces limitations. Par exemple, selon « Wong, K., Rudd, C., Pickering, S. et al. Composites recycling solutions for the aviation industry. Sci. China Technol. Sci. 60, 1291-1300 (2017). https://doi.org/10.1007/s11431-016-9028-7 »*,* l'incapacité à recycler les matériaux thermodurcissables constitue un défi majeur pour l'industrie aéronautique qui cherche particulièrement à réduire son empreinte écologique.

D'un autre côté, « Chardon G, Chanal H, Duc E, Garnier T. Study of surface finish of fiber-reinforced composite molds. Proceedings of the Institution of Mechanical Engineers, Part B: Journal of Engineering Manufacture. 2017;231(4):576-587. doi:10.1177/0954405415617929 *»* discute des coûts supplémentaires et des délais associés aux étapes de finition manuelle dans le processus de fabrication de coques composites. En effet, cet article examine le processus de production de pièces composites à l'aide de moules en Hextool (marque déposée), un plastique thermodurcissable renforcé de fibres de carbone. Il met en évidence la nécessité de finitions manuelles pour atteindre les exigences de qualité de surface et de dimensions. En particulier, il souligne que l'opération de polissage manuel est indispensable pour obtenir une rugosité de surface spécifique, et propose des méthodes pour optimiser le processus de fraisage afin de minimiser le temps de finition manuelle.

En contraste, les matériaux thermoplastiques offrent une alternative prometteuse. Contrairement aux thermodurcissables, les thermoplastiques peuvent être fondus et remodelés, facilitant ainsi leur recyclage. De plus, les procédés de fabrication utilisant des thermoplastiques peuvent potentiellement intégrer des étapes de finition directement dans le moule, simplifiant ainsi la chaîne de production et réduisant les coûts.

Le document WO 2020/065448 A1 divulgue un procédé de fabrication d'une coque pour fauteuil aéronautique.

Les solutions existantes mettent en lumière la nécessité d'innovations dans le domaine des procédés de fabrication de coques composites, visant à surmonter les limitations actuelles et à offrir des solutions plus efficaces et écologiques.

### PRÉSENTATION DE L'INVENTION

La présente invention vise à pallier tout ou partie des inconvénients de l'art antérieur exposés ci-avant, en proposant une solution innovante sous la forme d'un procédé « one shot » permettant la réalisation de coques thermoplastiques directement décorées et recyclables. En effet, la coque décorée est obtenue par une seule opération grâce à un moule chauffant autonome et régulé, permettant d'intégrer la finition dans le même temps.

Un objectif de l'invention est donc de réduire les étapes de fabrication, réduisant ainsi les coûts et le temps tout en améliorant la durabilité et l'empreinte écologique des produits finis.

À cet effet, la présente invention a pour objet un procédé de fabrication d'une coque pour fauteuil aéronautique, à partir d'une structure multicouche thermoplastique, ledit procédé étant remarquable en ce qu'il comprend :
- une étape de pose de la structure multicouche sur un moule autonome chauffant et autorégulé ;
- une étape d'application d'une membrane chauffante directement sur la structure multicouche ;
- une étape d'application d'une dépression dans le moule au moyen de la membrane chauffante, ladite dépression produisant une compression de la structure multicouche ;
- une étape de cuisson à une température prédéfinie, suivant un cycle régulé par le moule ; et
- une étape de démoulage et détourage de la coque (150) obtenue ;

Ce procédé comprend en outre l'intégration d'un film décoratif sur la structure multicouche pendant le moulage, avant l'étape de cuisson.

Ce procédé en une seule étape, dans le sens où il intègre toutes les étapes de fabrication y compris l'application du film décoratif dans le processus de moulage, permet de réduire le temps de production en combinant plusieurs étapes en une seule opération. Il améliore également la qualité en assurant une cuisson uniforme et l'intégration du décor, tout en simplifiant le processus global de fabrication.

Selon un aspect avantageux de l'invention, la structure multicouche est préalablement préparée et comprend un noyau en nid d'abeilles ou en mousse, pris en sandwich entre deux peaux thermoplastiques par l'intermédiaire de films adhésifs.

Selon un aspect de l'invention, le moule et la membrane chauffante chauffent respectivement une partie inférieure et une partie supérieure de la structure multicouche.

Le chauffage simultané des deux parties de la structure multicouche garantit une fusion homogène et une qualité de moulage supérieure, réduisant les risques de déformation et d'imperfections.

Selon un mode de réalisation, l'étape de cuisson se déroule selon un profil de température présentant un palier constant correspondant à la température de fusion de films adhésifs contenus dans la structure multicouche.

Le profil de température régulé assure que les films adhésifs atteignent leur température de fusion, garantissant une adhésion parfaite et une consolidation efficace de la structure multicouche.

L'invention a également pour objet une coque thermoplastique décorée, obtenue par le procédé tel que présenté.

La coque obtenue est directement décorée, ce qui élimine la nécessité de post-traitements décoratifs, réduisant ainsi le coût et le temps de production.

Plus particulièrement, cette coque comprend un noyau en nid d'abeilles pris en sandwich entre deux peaux thermoplastiques.

Le noyau en nid d'abeilles offre une excellente résistance mécanique tout en maintenant un poids minimal, idéal pour les applications aéronautiques.

Plus particulièrement encore, le noyau en nid d'abeilles est tubulaire et isotrope dans les directions du plan médian des peaux thermoplastiques.

Le noyau tubulaire isotrope assure une distribution uniforme des contraintes, améliorant ainsi la performance structurelle de la coque et augmentant sa durée de vie.

Selon un mode de réalisation, les peaux thermoplastiques sont renforcées de fibres choisis parmi le PEI, le PPS, le PC ou le PEEK.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé de fabrication d'une coque thermoplastique décorée, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : un synoptique des principales étapes d'un procédé de fabrication d'une coque thermoplastique selon un mode de réalisation de l'invention ;
- Figure 2 : une coupe schématique d'une structure multicouche pour la mise en œuvre du procédé et dont sera issue la coque ;
- Figure 3 : un exemple de profil de température appliqué lors de l'étape de cuisson ;
- Figure 4 : un schéma des principaux éléments pour la mise en œuvre du procédé, comprenant un moule autonome chauffant et une membrane chauffante ;
- Figure 5 : un exemple de coque finie obtenue par le procédé selon l'invention.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un procédé de fabrication de coques thermoplastiques, principalement destiné à la fabrication de coques d'habillage décorées pour fauteuils aéronautiques. Cet exemple, non limitatif, est donné pour une meilleure compréhension de l'invention et n'exclut pas la mise en œuvre du procédé dans d'autres secteurs industriels pour fabriquer d'autres types de pièces.

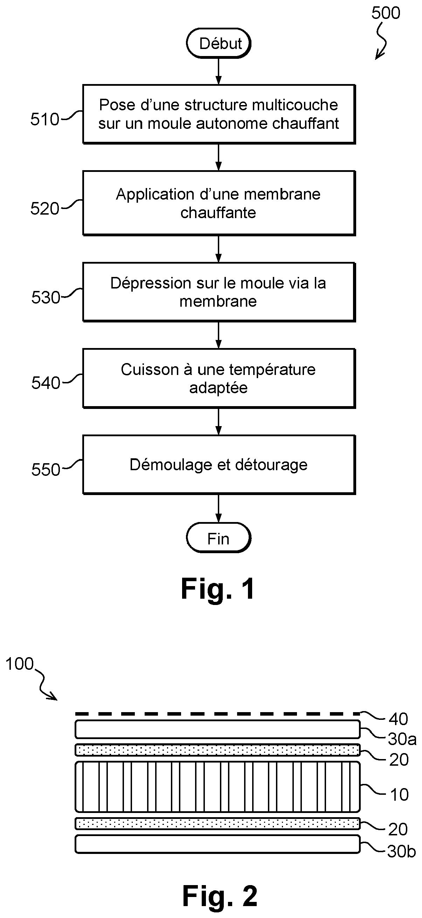

La figure 1 représente les principales étapes d'un procédé 500 de fabrication d'une coque thermoplastique décorée, ledit procédé comprenant :
- une étape initiale 510 de pose d'une structure multicouche thermoplastique sur un moule autonome chauffant ;
- une étape 520 d'application d'une membrane chauffante par-dessus la structure multicouche ;
- une étape 530 de dépression sur le moule via la membrane chauffante ;
- une étape 540 de cuisson à une température prédéfinie ; et
- une étape finale 550 de démoulage et détourage de la coque obtenue.

Le procédé 500 permet avantageusement de réaliser une coque thermoplastique décorée en une seule opération intégrée, minimisant ainsi les étapes de fabrication et les manipulations intermédiaires. Contrairement aux méthodes traditionnelles qui nécessitent plusieurs étapes distinctes de drapage, de cuisson et de finition, ce procédé « one shot » permet de réduire les coûts, le temps de production et les risques d'erreur tout en améliorant la qualité, la légèreté et la recyclabilité des produits finis.

L'étape 510 de pose d'une structure multicouche thermoplastique sur un moule autonome chauffant consiste à disposer une structure composée de plusieurs couches de matériaux thermoplastiques sur un moule spécialement conçu pour être chauffé de manière autonome. Ce moule est équipé de systèmes de régulation de la température permettant de garantir une distribution uniforme de la chaleur, essentielle pour le bon déroulement des étapes suivantes.

La figure 2 représente une structure multicouche 100 pour la mise en œuvre du procédé 500. La structure multicouche 100 comprend un noyau 10 en nid d'abeilles, tubulaire avec un comportement isotrope dans les directions du plan, pris en sandwich entre deux peaux thermoplastiques, une peau supérieure 30a et une peau inférieure 30b, par l'intermédiaire de films adhésifs 20. Un film de décor 40 est appliqué sur la peau supérieure 30a en cours de procédé.

Le noyau en nid d'abeilles 10 est conçu pour fournir une bonne résistance mécanique tout en minimisant le poids final de la coque qui sera obtenue. Cette structure isotrope assure une distribution uniforme des contraintes.

Alternativement, le noyau 10 peut être en mousse.

Les films adhésifs 20 sont placés de part et d'autre du noyau en nid d'abeilles 10. Ces films permettent l'assemblage des couches, assurant une liaison forte et durable entre le noyau 10 et les peaux thermoplastiques 30a et 30b. Les adhésifs utilisés sont sélectionnés pour leur compatibilité avec les matériaux thermoplastiques et leur capacité à résister aux conditions de fabrication et d'utilisation finale. Ils comprennent par exemple une colle spéciale.

Les peaux thermoplastiques 30 sont renforcées de fibres choisis parmi des matériaux tels que le PEI (Polyétherimide), le PPS (Sulfure de polyphénylène), le PC (Polycarbonate) ou le PEEK (Polyétheréthercétone). Ces matériaux offrent une combinaison idéale de résistance, de rigidité et de légèreté, tout en étant capables de subir les processus de chauffage et de moulage nécessaires à la fabrication de la coque.

Le film de décor 40 est appliqué sur la surface extérieure de la peau thermoplastique supérieure 30a. Ce film décoratif est intégré directement lors du processus de moulage, ce qui permet de réaliser une finition esthétique et durable sans nécessiter d'étapes supplémentaires de post-traitement. Le film de décor 40 est conçu pour résister aux contraintes d'utilisation.

La structure multicouche 100 ainsi décrite est posée sur le moule avant l'étape 520 d'application de la membrane chauffante.

L'étape 520 d'application de la membrane chauffante par-dessus la structure multicouche 100 consiste à placer une membrane, de type bâche, capable de générer de la chaleur directement au-dessus de la structure multicouche. Cette membrane chauffante assure une pression uniforme sur la structure et améliore l'adhérence entre les différentes couches, tout en débutant le processus de fusion nécessaire pour former une coque homogène.

L'étape 530 de dépression sur le moule via la membrane chauffante consiste à appliquer une dépression (ou vide) à travers la membrane chauffante, ce qui permet compresser l'ensemble et d'éliminer les bulles d'air pour d'assurer une meilleure consolidation des couches thermoplastiques. Cette dépression aide également à maintenir la structure en place et à garantir une finition de haute qualité sans défauts.

L'étape 540 de cuisson à une température adaptée consiste à chauffer l'ensemble de la structure multicouche à une température prédéfinie, correspondant à la température de fusion des films adhésifs 20. Cette cuisson est régulée par le moule autonome, garantissant ainsi une température constante et homogène sur toute la surface de la coque, ce qui est crucial pour obtenir les propriétés mécaniques et esthétiques désirées.

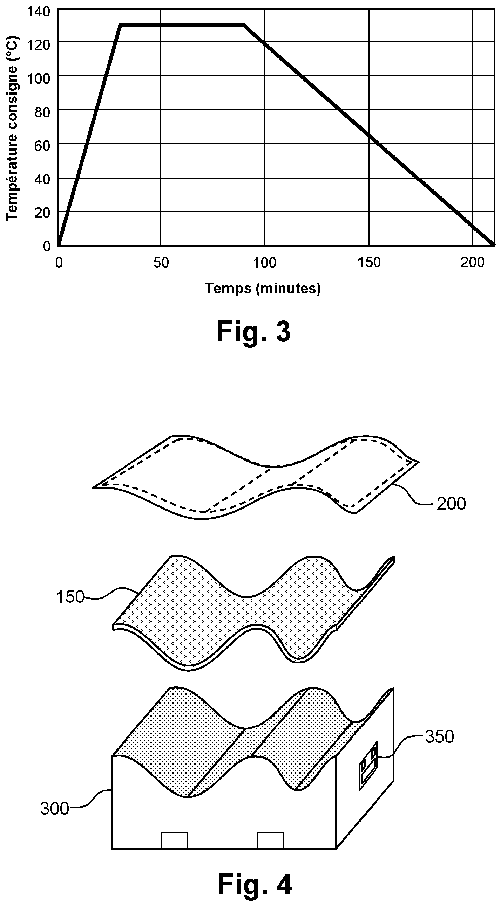

La figure 3 représente un exemple de profil de température de cuisson utilisé lors de l'étape 540 du procédé 500. Ce profil de température permet d'assurer une fusion homogène et un durcissement optimal de la coque thermoplastique issue de la structure multicouche 100.

Le graphique montre que la température consigne commence à augmenter rapidement dès le début du processus. De 0 à environ 30 minutes, la température monte progressivement jusqu'à atteindre environ 130°C. Cette phase de montée en température permet de préparer la structure multicouche pour la phase de fusion.

Entre 30 et 90 minutes, la température est maintenue constante à environ 130°C. Cette phase de plateau thermique assure une fusion complète et uniforme des matériaux thermoplastiques, permettant une bonne adhérence entre les différentes couches et une consolidation optimale de la structure.

Après 90 minutes, la température commence à diminuer progressivement. Cette phase de refroidissement contrôlé, qui s'étend de 90 à un peu plus de 200 minutes, permet de solidifier la structure multicouche sans introduire de tensions internes ou de déformations. La température revient à la valeur ambiante, garantissant que la coque thermoplastique est suffisamment durcie avant le démoulage.

L'étape finale 550 de démoulage et détourage de la coque obtenue consiste à retirer délicatement la coque du moule une fois que le matériau thermoplastique a suffisamment refroidi et durci. Ensuite, la coque est détourée pour enlever les excès de matériau et obtenir les dimensions finales souhaitées. Cette étape inclut également l'inspection finale pour s'assurer que la coque répond aux spécifications de qualité et de design.

La figure 4 représente des éléments nécessaires à la mise en œuvre du procédé 500 de fabrication d'une coque thermoplastique décorée, ces éléments comprennent notamment un moule 300 et une bâche chauffante 200.

La coque obtenue 150 est démoulée à la fin du procédé et provient de la structure multicouche 100 initialement posée dans le moule.

Le moule 300, dont seule la partie inférieure autochauffante est représentée, est équipé d'un système de régulation 350. La surface visible du moule est chauffante, permettant de chauffer uniformément la structure multicouche posée à l'intérieur. Le système de régulation 350 assure un contrôle précis des conditions thermiques, garantissant ainsi une fusion et un durcissement homogènes des matériaux thermoplastiques.

En particulier, le système de régulation 350 ajuste en permanence la température pour maintenir les conditions idéales de cuisson, selon le profil de température de la figure 3 par exemple.

La bâche chauffante 200 est destinée à être placée sous la partie supérieure du moule, comme indiqué par les pointillés sur la figure. Cette bâche permet de chauffer la partie supérieure de la structure multicouche tout en exerçant une pression de compression par le biais d'une dépression appliquée. Cette compression assure une adhérence parfaite entre les différentes couches et une finition homogène de la coque.

Après la phase de cuisson, qui implique un plateau thermique suivi d'une phase de refroidissement contrôlée, la coque 150 est formée. La coque, désormais solidifiée et décorée, est démoulée. Le démoulage se fait délicatement pour préserver l'intégrité de la coque et garantir une finition parfaite.

La coque 150, réalisée en sandwich avec un décor visible sur sa face supérieure, est le résultat du processus de moulage. Après avoir subi les différentes étapes de chauffage, de compression et de refroidissement, la coque est démoulée et présente une structure robuste et décorée. Le décor intégré pendant le moulage élimine la nécessité de post-traitements supplémentaires, réduisant ainsi les coûts et le temps de production.

Le procédé 500 permet ainsi une fabrication efficace et intégrée de coques thermoplastiques décorées, en une seule opération de moulage, réduisant les manipulations intermédiaires et améliorant la qualité et la durabilité du produit final. L'utilisation combinée de la bâche chauffante 200 et du moule autochauffant 300 avec régulateur 350 assure une production optimisée, tant en termes de temps que de coûts, tout en garantissant les performances souhaitées des coques fabriquées.

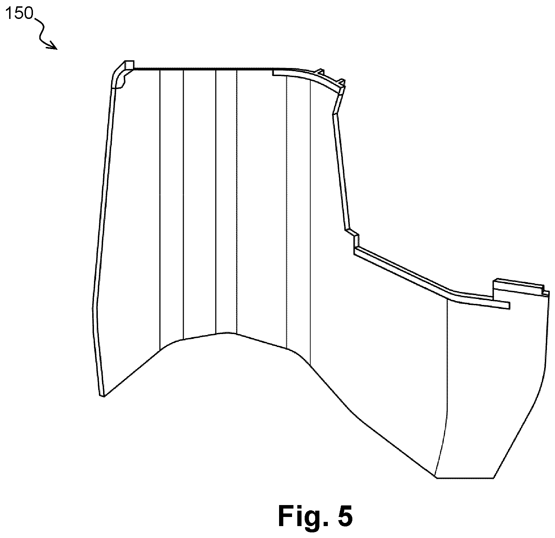

La figure 5 montre un exemple de la coque finale 150 obtenue après la mise en œuvre du procédé décrit.

La coque 150 présente une surface extérieure lisse et décorée, conforme aux exigences esthétiques et fonctionnelles pour une utilisation dans les fauteuils d'avion de première classe et classe affaires. Le décor intégré, visible sur la face supérieure, a été appliqué directement pendant le processus de moulage, garantissant ainsi une finition homogène sans nécessiter d'étapes de post-traitement supplémentaires.

Tel que décrit, le procédé de fabrication de coques thermoplastiques décorées présenté offre de nombreux avantages. La recyclabilité des matériaux thermoplastiques utilisés permet une gestion plus écologique des produits en fin de vie. La production en une seule opération, grâce à l'utilisation d'un moule autonome chauffant autorégulé, réduit considérablement les temps de fabrication et les coûts associés. De plus, l'intégration du décor lors de l'opération de moulage assure une finition esthétique homogène sans étapes de post-traitement supplémentaires.

Certaines étapes non essentielles peuvent être ajoutées au procédé selon les besoins industriels, comme l'application de revêtements protecteurs supplémentaires ou l'intégration de renforts structuraux spécifiques. Des ajustements mineurs, tels que la modification des paramètres de température et de pression en fonction des matériaux utilisés, peuvent également être réalisés pour optimiser la qualité et la performance des coques produites. Ce procédé flexible et efficace répond ainsi aux exigences élevées des applications aéronautiques et autres domaines nécessitant des composants légers et robustes.

Par exemple, le procédé peut inclure une étape supplémentaire de préchauffage de la structure multicouche avant l'application de la membrane chauffante. Ce préchauffage permet de réduire les contraintes thermiques lors de l'application de la dépression et d'assurer une meilleure fusion des couches thermoplastiques.

Dans une autre variante, le moule autonome chauffant peut être équipé de capteurs de pression intégrés, permettant de réguler non seulement la température mais aussi la pression exercée sur la structure multicouche. Cette régulation précise de la pression peut améliorer la qualité de la fusion et la consolidation des couches, réduisant ainsi les défauts potentiels.

Une autre variante technique envisage l'utilisation de peaux thermoplastiques présentant des renforts localisés dans des zones spécifiques de la coque, telles que les zones de fixation ou de connexion aux autres composants du fauteuil. Ces renforts localisés peuvent être obtenus par l'ajout de fibres supplémentaires dans ces zones, augmentant ainsi la résistance mécanique sans augmenter significativement le poids total de la coque.

Enfin, dans une variante additionnelle, le procédé peut inclure une étape d'inspection par imagerie thermique après la cuisson et avant le démoulage. Cette inspection permet de détecter d'éventuels défauts internes ou des zones mal fusionnées, assurant ainsi que seule la coque de qualité optimale est démoulée et prête à être utilisée.

## Revendications

1. Procédé (500) de fabrication d'une coque (150) pour fauteuil aéronautique, à partir d'une structure multicouche (100) thermoplastique, ledit procédé étant **caractérisé en ce qu'**il comprend :
- une étape (510) de pose de la structure multicouche (100) sur un moule (300) autonome chauffant et autorégulé ;
- une étape (520) d'application d'une membrane chauffante (200) directement sur la structure multicouche ;
- une étape (530) d'application d'une dépression dans le moule au moyen de la membrane chauffante, ladite dépression produisant une compression de la structure multicouche ;
- une étape (540) de cuisson à une température prédéfinie, suivant un cycle régulé par le moule ; et
- une étape (550) de démoulage et détourage de la coque (150) obtenue ;
ledit procédé comprenant en outre l'intégration d'un film décoratif (40) sur la structure multicouche pendant le moulage, avant l'étape (540) de cuisson.

2. Procédé selon la revendication 1, dans lequel la structure multicouche (100) est préalablement préparée et comprend un noyau (10) en nid d'abeilles ou en mousse, pris en sandwich entre deux peaux thermoplastiques (30a, 30b) par l'intermédiaire de films adhésifs (20).

3. Procédé selon la revendication 1 ou 2, dans lequel le moule (300) et la membrane chauffante (200) chauffent respectivement une partie inférieure et une partie supérieure de la structure multicouche (100).

4. Procédé selon l'une quelconque des revendications précédentes, dans lequel l'étape (540) de cuisson se déroule selon un profil de température présentant un palier constant correspondant à la température de fusion de films adhésifs (20) contenus dans la structure multicouche (100).

5. Coque (150) thermoplastique décorée, obtenue par un procédé (500) selon l'une quelconque des revendications précédentes.

6. Coque selon la revendication 5, comprenant un noyau en nid d'abeilles (10) pris en sandwich entre deux peaux thermoplastiques (30a, 30b).

7. Coque selon la revendication 6, dans laquelle le noyau en nid d'abeilles (10) est tubulaire et isotrope dans les directions du plan médian des peaux thermoplastiques (30a, 30b).

8. Coque selon la revendication 6 ou 7, dans laquelle les peaux thermoplastiques (30a, 30b) sont renforcées de fibres choisis parmi le PEI, le PPS, le PC ou le PEEK.

## Patentansprüche

1. Verfahren (500) zur Herstellung einer Flugzeugsitzschale (150) aus einer thermoplastischen Mehrschichtstruktur (100), wobei das Verfahren **dadurch gekennzeichnet ist, dass** es umfasst:
- einen Schritt (510) des Auflegens der Mehrschichtstruktur (100) auf eine autonome, selbstregulierte Heizform (300);
- einen Schritt (520) des Aufbringens einer Heizmembrane (200) direkt auf die Mehrschichtstruktur;
- einen Schritt (530) des Anlegens von Vakuum in der Form mittels der Heizmembrane, wobei das Vakuum eine Kompression der Mehrschichtstruktur erzeugt;
- einen Schritt (540) des Backens bei einer vordefinierten Temperatur gemäß einem durch die Form regulierten Zyklus;
- und einen Schritt (550) des Entformens und Beschneidens der erhaltenen Schale (150);
wobei das Verfahren ferner das Integrieren einer Dekorfolie (40) auf die Mehrschichtstruktur während des Formens vor dem Backschritt (540) umfasst.

2. Verfahren nach Anspruch 1, wobei die Mehrschichtstruktur (100) im Voraus vorbereitet wird und einen Waben- oder Schaumstoffkern (10) umfasst, der über Klebefolien (20) zwischen zwei thermoplastischen Deckschichten (30a, 30b) sandwichartig angeordnet ist.

3. Verfahren nach Anspruch 1 oder 2, wobei die Form (300) und die Heizmembrane (200) jeweils einen unteren Teil und einen oberen Teil der Mehrschichtstruktur (100) erwärmen.

4. Verfahren nach einem der vorhergehenden Ansprüche, wobei der Backschritt (540) gemäß einem Temperaturprofil erfolgt, das eine konstante Stufe aufweist, die der Schmelztemperatur von in der Mehrschichtstruktur (100) enthaltenen Klebefolien (20) entspricht.

5. Dekorierte thermoplastische Schale (150), erhalten durch ein Verfahren (500) nach einem der vorhergehenden Ansprüche.

6. Schale nach Anspruch 5, umfassend einen Wabenkern (10), der zwischen zwei thermoplastischen Deckschichten (30a, 30b) sandwichartig angeordnet ist.

7. Schale nach Anspruch 6, wobei der Wabenkern (10) rohrförmig und isotrop in den Richtungen der Mittelebene der thermoplastischen Deckschichten (30a, 30b) ist.

8. Schale nach Anspruch 6 oder 7, wobei die thermoplastischen Deckschichten (30a, 30b) mit Fasern verstärkt sind, die aus PEI, PPS, PC oder PEEK ausgewählt sind.

## Claims

1. A method (500) for manufacturing an aircraft seat shell (150), from a thermoplastic multilayer structure (100), said method being **characterized in that** it comprises:
- a step (510) of laying the multilayer structure (100) over an autonomous self-regulated heating mold (300);
- a step (520) of applying a heating membrane (200) directly over the multilayer structure;
- a step (530) of applying vacuum into the mold by means of the heating membrane, said vacuum producing a compression of the multilayer structure;
- a step (540) of baking at a predefined temperature, according to a cycle regulated by the mold;
- and a step (550) of demolding and trimming the obtained shell (150);
said method further comprising integrating a decorative film (40) onto the multilayer structure during molding, before the baking step (540).

2. The method according to claim 1, wherein the multilayer structure (100) is prepared beforehand and comprises a honeycomb or foam core (10), sandwiched between two thermoplastic skins (30a, 30b) via adhesive films (20).

3. The method according to claim 1 or 2, wherein the mold (300) and the heating membrane (200) respectively heat a lower part and an upper part of the multilayer structure (100).

4. The method according to any one of the preceding claims, wherein the baking step (540) takes place according to a temperature profile having a constant step corresponding to the melting temperature of adhesive films (20) contained in the multilayer structure (100).

5. A decorated thermoplastic shell (150), obtained by a method (500) according to any one of the preceding claims.

6. The shell according to claim 5, comprising a honeycomb core (10) sandwiched between two thermoplastic skins (30a, 30b).

7. The shell according to claim 6, wherein the honeycomb core (10) is tubular and isotropic in the directions of the midplane of the thermoplastic skins (30a, 30b).

8. The shell according to claim 6 or 7, wherein the thermoplastic skins (30a, 30b) are reinforced with fibers selected from among PEI, PPS, PC or PEEK.
